# EUROPEAN PATENT SPECIFICATION

(11) **EP 0 465 497 B1**
(45) Date of publication and mention of the grant of the patent: **21.12.1994**
(21) Application number: 90904839.9
(22) Date of filing: 27.03.1990
(51) Int. Cl.: B60S 13/02, A47F 5/025, B66F 7/22

(54) **DISPLAY STAND FOR MOTORCARS**
VORFÜHRUNGSSTAND FÜR PERSONENKRAFTWAGEN
PRESENTOIR POUR VOITURES

(30) Priority: 28.03.1989 FI 891447
(43) Date of publication of application: 15.01.1992
(73) Proprietor: KANKAANPÄÄ, Juha Jaakko, SF-63800 Soini (FI)
(72) Inventor: KANKAANPÄÄ, Juha Jaakko, SF-63800 Soini (FI)
(74) Representative: Platt, Timothy Nathaniel
(86) International application number: FI9000079
(87) International publication number: WO9011211

(56) References cited:
- WO-A-86/06336
- US-A- 1 721 335

## Description

The invention relates to a display stand for motorcars, more precisely such a display stand having two extensible and retractile carriage bridges, one for the left-hand wheels the other for the right-hand wheels.

This kind of devices are used in the first place in car markets, in different exhibition halls, garages and alike, where it is desirable to display some particular motorcar in a very spectacular way. Therefore, the purpose of the display stand is to display the motorcar so that it draws the attention of a potential buyer and, at the same time, so that it can be seen from different angles and also so that the inside can be seen.

A turntable for motorcars is presented in the patent publication US-3 170 411. It is intended, however, for turning the motorcar 180° in order to ease the traffic for instance in garages. When the car has been driven on to this stand it can be turned 180° by the car engine power.

A turntable, which is intended for turning a vehicle 180°, being provided with carriage bridges, is presented in the publication WO 86/06336. The carriage bridges make a small angle with the floor plane so that the stand can turn 180° against a spring force by its own weight.

Another kind of turning display stand according to the preamble of claim 1 is presented in the publication US-4 020 767. It is particularly intended for bigger vehicles and, therefore, the location of the beds for the wheels can be adjusted relatively to its center. However, the display device rotates only in the horizontal plane and close to the floor surface. It is not capable of drawing particularly well the attention of passers-by with its even rotational motion.

The object of this invention is to provide such a display stand which draws the attention of passers-by and on which the motorcar is well displayed from all sides and which has an elegant appearance.

This has been accomplished by providing the above defined display stand with the characteristics according to the distinctive part of claim 1.

Other characteristics and advantageous embodiments will become clear in the following explanation.

The display stand according to the invention is provided with two axles of rotation; one vertical about which the body, supported on the floor, rotates and the other which forms a small angle, about 10-30°, advantageously about 20°, with the horizontal plane and about which the carriage bridges rotate. The carriage bridges are mounted in bearings on the upper surface of the rotating body, the upper surface making the above mentioned angle with the horizontal plane.

The motor of the stand body rotates the body at a desired speed either clockwise or counterclockwise. At the same time, the motor of the carriage bridges rotates the carriage bridges at a desired speed either clockwise or counterclockwise about a perpendicular axle with respect to the sloping upper plane of the body. When both motors are working the carriage bridges perform a combined rotational motion. They rotate in their own sloping plane while the sloping plane rotates along with the body.

As seen by the viewer the motorcar continuously rotates about its center so that the front of the motorcar is by turns close to the viewer and far from the viewer. At the same time, the motorcar is always inclined to the floor by the above mentioned angle.

If the directions and the speeds of rotations are the same, the speed of rotation of the motorcar is double compared to that of the body. If the directions of rotations are opposite but the speeds are equal, the motorcar seems to stand still while performing a wavelike motion. The visual impression is effective.

One of the rotational motors can be cut off and then only the other rotational motion is going on. Speeds of rotations are generally the same and advantageously 1 rpm. There are naturally exceptions from this.

To ascertain absolutely reliable operation of the display stand the ends of the moving parts of the carriage bridge can be provided with rolling stops, which rise to stop position and descend to free position, respectively, by the influence of guide elements of the moving parts of the carriage bridge. The rolling stops rise to the stop position as soon as the pair of wheels in question have reached their place on the ends of the moving parts of the carriage bridges. Respectively, they descend to free position when the carriage bridges are in their maximum length and the motorcar is ready for driving out.

While the motorcar is being fitted on to the stand and the lengths of the carriage bridges are adapted to the length of the motorcar and, respectively, while the car is being driven out from the stand, only the motor which controls the carriage bridges can be working. The motors effecting rotation are then prevented from working for safety reasons. Therefore, there cannot be any rotation while the motorcar is being fitted on to the stand and while it is being driven out from it.

Two worm shafts function advantageously as the guide element for the moving parts of the carriage bridge, said worm shafts being connected at their ends by a motor driven driving shaft. The worm shafts are, in known manner, provided with e.g. left-hand threading on one end and right-hand threading on the other end. There are guides on the ends of the worm shafts which, depending on their direction of motion, push the carriage bridge parts outward or pull them inward, respectively.

The guides of the worm shafts also control the functioning of the rolling stops. The rolling stops are advantageously roughly L-shaped bell cranks, being mounted in bearings on the ends of the moving parts of the carriage bridges, which lean, in stop position, against the wheels of the motorcar and whose axles of rotation are connected each to its own guide element of the carriage bridge.

The axles of rotation of these bell cranks are connected, by means of a chain or the like, to the guide on the ends of the worm shafts. Furthermore, the axles of rotation cooperate with a latch device connected to a turning wheel detecting plate.

By this arrangement the rolling stops on the drive-in side rise to stop position before adapting the lengths of the moving parts of the carriage bridge to the length of the motorcar. Rising takes place as soon as the motor, which is controlling the carriage bridges, is started and starting takes place as soon as the back wheels of the motorcar are in place on the ends of the carriage bridges, or in case of backing the motorcar on to the carriage bridges as soon as the front wheels are in place. Then the wheels have pressed the lower detecting plates down and the latch devices coupled therewith have freed the axles of rotation of the rolling stops. The motor-driven worm shafts shift the guides on the end of the shafts inward and then the chains, being connected therewith, draw the bell cranks to the upper position. After this, the moving parts of the carriage bridges are retracted. The moving parts of the carriage bridges, on the other end, start immediately the retraction while the bell cranks remain in the lower position. It is only when the front parts of the carriage bridges have moved inward to such an extent that the upper detecting plates make contact with the front wheels of the motorcar that the bell cranks rise to stop position. As a result from pressing down the detecting plates, the axles of rotation of the bell cranks are released and, therefore, further moving of the guides effect rising of the bell cranks to the upper position. During rising of the bell cranks the moving parts of the carriage bridges do not any more move inward. However, at the same time, the left-hand moving parts of the carriage bridges still move inward until the motor stops automatically when the right-hand bell cranks have reached their upper position. In this way a symmetric disposition of the motorcar on the carriage bridges has been achieved i.e. so that the carriage bridges on both sides are equally long. The rotational motors or one of them can now be started. The driver has left the motorcar when the lower wheels of the motorcar are in place and when the motor is started.

The bell cranks acting as rolling stops can be adjusted to fit wheels of different sizes. This is accomplished simply by adjusting the lengths of the bell crank arms which are parallel with the carriage bridges.

The end parts of the carriage bridges are advantageously sloped upwards to provide a firm support for the motorcar. The lower ends come fairly close to the floor surface, at the maximum length of the carriage bridges, but do not touch it. When the motorcar is driven on to the carriage bridges or out from them, a triangular separate body, an auxiliary triangle body, is inserted as an extension to the carriage bridges. Then, the motorcar must overcome an angle which is a little steeper than the inclination of the glide planes but it has no essential effect on driving.

The maximum length of the carriage bridge is advantageously about 3800 mm corresponding the wheel base of 3200 mm. The longitudinal adjustability of the carriage bridges enables axle lengths between 2100 and 3200 mm. The track width can be advantageously adjusted between 1300 and 1600 mm. This adjustment range is sufficient for motorcars. Naturally one can construct a display stand for bigger cars according to the same principles.

The display stand is advantageously constructed so that the rotating stand is firmly mounted in bearings on the support, which is anchored on the floor, whereon also the motor has been fitted. On the support, there is a rotating, horizontal plate onto which the sloping plane of the display stand has been constructed. Also the carriage bridges are mounted on the sloping plane and the motor for the rotational motion is fitted thereon. The sloping plane is surrounded by a shell structure extending close to the floor surface and having wheels on the lower edge. This shell is still surrounded by a flange, being parallel with the floor, extending outwardly from the lower edge and having wheels on the outer frame. The shell structure of the stand is advantageously conically tapering upward and has advantageously a hexagonal cross section. Also the periphery of said flange is hexagonal. Furthermore, the shell and the flange are both coated with mirror glass. This substantially increases the impressiveness of the display stand.

The diameter of the sloping plane of the display stand is preferably a little less than the length of the rigid part of the carriage bridges which is about 2000 mm. The diameter of the flange is a little less than the maximum length of the carriage bridges so that it covers the surface under the carriage bridges, however, not extending so far that it would prevent one from placing the auxiliary triangle as extensions to the carriage bridges and from driving on to the carriage bridges.

The three motors of the display stand can all be preferably worm gear motors. Their control devices are easily accessible to the user.

A display stand constructed in this way is versatile in its motions; it displays the motorcar impressively and in a spectacular way and it works safely.

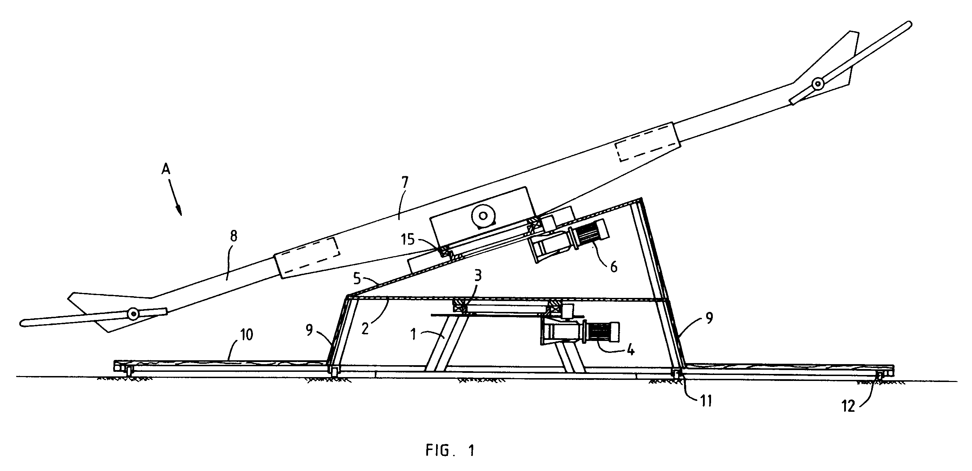

One embodiment of the display stand according to the invention is explained in the following with reference to the enclosed drawings in which
figure 1 shows a cross section of a display stand viewed from the side,
figure 2 shows the construction of the carriage bridge of figure 1 viewed from above in direction A,
figure 3 shows the other carriage bridge of figure 1 as a longitudinal section,
figure 4 shows the carriage bridge of figure 3 viewed from above.

The support anchored on the floor is marked with reference number 1 in the figures and the cover mounted in bearings thereon with number 2. The location of the bearings on the cover is marked with number 3. The motor rotating the stand is marked with number 4. The sloping plane of the stand is marked with number 5 and the motor for the carriage bridges fitted thereon with number 6. The rigid part of the carriage bridge is marked with number 7 and its bearings on the sloping plane with number 15.

The shell surrounding the stand is marked with number 9 and the flange part, being attached to its lower edge parallel with the floor, with number 10. The lower edge of the shell is provided with wheels 11 and the periphery of the flange with wheels 12. The wheels 11 on the stand shell always support on the floor but the wheels on the lower plane touch the floor only when the lower plane is loaded, for example when someone steps on it.

The shell structure is e.g. of a light chip board structure and it is coated with mirror glass. Since the shell has an angular cross section, a hexagon, the mirror coating gives a very spectacular impression during rotation of the stand.

When the stand is rotating the carriage bridge structure mounted in bearings thereon rotates therewith. In addition to this rotation the carriage bridge structure rotates as a result of its own motor 6. The motor can rotate the carriage bridges in the same direction as the stand or in the opposite direction. Both motors have preferably the same rotational speed, for example 1 rpm.

When the carriage bridges are rotating in the same direction and with the same speed as the stand, their rotational speed will be double compared to the rotational speed of the stand. When the carriage bridges, along with the motorcar thereon, have completed one revolution, the sloping plane of the carriage bridges has turned so that, for example, the back of the motorcar which was closest to the floor is now farthest away from the floor plane. It is a question of a combined waving and rotating motion.

When the carriage bridges are rotating in the opposite direction but with the same speed as the stand, their rotational speed will be zero. The motorcar is all the time in the same position with respect to a vertical plane i.e. it does not turn but it continuously swings so that the front and the back of the motorcar are in turn in the upper position and the lower position.

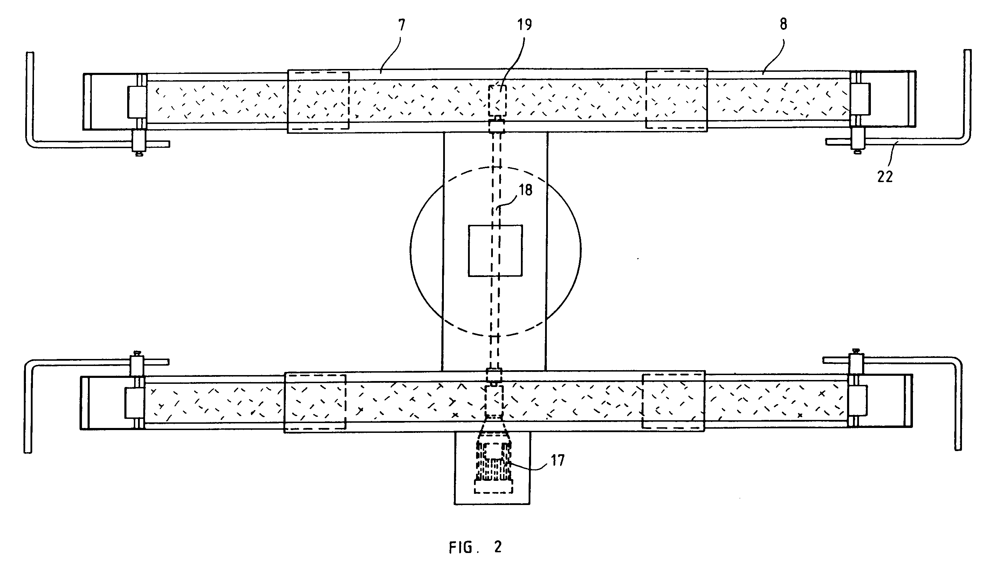

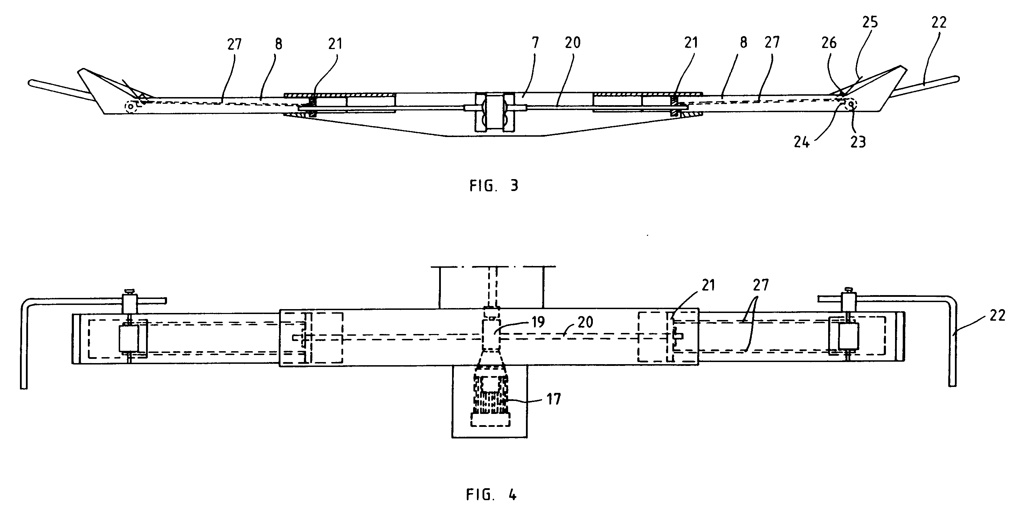

The carriage bridge structure is best revealed in figures 2 and 3. The motor controlling the moving parts of the carriage bridge is marked with reference number 17. The motor axle 18 transfers the rotational motion to the worm shafts 20 by means of worm gears 19. The ends of the worm shafts are provided with guides 21. The upwardly sloping ends of the moving carriage bridge parts are provided with bell cranks 22 acting as rolling stops. The axle of rotation of the bell crank is marked with reference number 23 and the latch thereon with reference number 24. The detecting plate for the wheels of the motorcar is marked with reference number 25 and the latch device, being rigidly connected thereto, with number 26. The chain, pulling the bell crank to stop position, is marked with number 27. The chain is connected to the guide 21 at one end and to the axle of rotation of the bell crank at the other end.

The inner ends of the carriage bridge parts 8 intrude into the rigid parts 7. The rigid part of the carriage bridge is provided with microswitches to stop the motor 17, controlling the carriage bridges, when one of the rising bell cranks has risen to stop position.

When there is no motorcar on the display stand, the carriage bridges are generally at their maximum length, and the bell cranks in the down position. When a motorcar is to be driven on to the stand, the auxiliary triangular body is at first placed to form an extension of the lower carriage bridges, in figure 2 the left-hand carriage bridges. The motorcar is driven either by driving forward or by backing over the auxiliary body and the upwardly sloping end of the carriage bridge. As the first wheels pass the detecting plates 25, the axle of rotation of the bell crank is released from the locking of the latch. The bell crank is, at this stage, in lowered position and nothing happens to it yet. The motorcar continues its way until the latter wheels are on top of the first mentioned detecting plates. At this stage, the engine of the motorcar is stopped and the hand brake or the gear is set on so that the front wheels can rotate when the moving parts of the carriage bridge move inward. At the same time as the car engine is stopped, the motor 17 controlling the carriage bridges can be started. This is easily performed by a controller being within reach of the driver. At this stage the driver generally gets off the motorcar. When the motor 17 is in operation, the worm shafts rotate and the guides move inward.

Then, the following things happen on the left-hand side (see Fig. 3 and 4):
The guide 21 tightens the chain 27 whereby the axle 23 rotates and the bell crank 22 rises to stop position. As the bell crank has reached the stop position also the chain has straightened. The guide goes on with an even motion and now causes intruding of the moving part 8 of the carriage bridge.

On the right-hand side the following things happen (see Fig. 3 and 4):
The guide 21 tightens the chain 27 but this is prevented from unrolling from the axle 23 which is locked in a non-rotating position by the latch 26. The guide now pulls from the axle of rotation 23 the moving part 8 of the carriage bridge inward. This motion goes on until the front wheels hit the detecting plate 25 which releases the axle of rotation 23 of the bell crank 22. The motor 17 is still operating and the guide 21 now unrolls the chain 27 from the axle which rotates and, at the same time, lifts the bell crank to stop position. When this right-hand bell crank has reached its stop position, the microswitch will halt the motor and the motion of the guide 21 will stop.

At the same time as the bell cranks on the right-hand side rise, the left-hand moving parts of the carriage bridge move further inward. In this way, the moving parts of the carriage bridge on both sides will move exactly as much and the carriage bridge structure is symmetric relatively to its axle of rotation. The front wheels of the motorcar move, at this last stage, towards the right-hand ends of the carriage bridges taking their place against the bell cranks 22.

The arm length of the bell cranks 22 can be adjusted to fit the size of the wheel each time. The motor 17 of the carriage bridge is, at this stage, switched off and the motors 4 and 6 which effect the rotation of the stand and the carriage bridges are switched on. Therefore, the motor 17 cannot be in operation simultaneously with the motors 4 and 6 or vice versa.

When the motorcar is driven away from the carriage bridges, reversed action takes place. When the motors 4 and 6 have been disconnected and the motor 17 started, the guides start moving outward. The bell cranks 22 will then turn downward on both sides, at first by their own weight, and as the chain 27 gains more length, by the movement of the guide. When the bell cranks are in the lowered position, the guides have reached the place where they meet the inner end of the moving carriage bridges and push them outward. The motor operates as long as the carriage bridges have reached their maximum length. Exit takes place over the upwardly sloped ends of the carriage bridges and the loose pieces.

The above described display stand is only one exemplary embodiment of a display stand according to the invention. It is obvious that it can be varied in many ways without deviating from the idea of the invention as defined in the claims. The essential point in the idea according to the invention is the versatile rotational motion.

## Claims

1. Rotatable display stand for motorcars rotatable about a vertical axis and having two extensible and retractile carriage bridges (7, 8), one for the left-hand wheels the other for the right-hand wheels, **characterized** in that the stand has an upper surface (5) making an angle with the horizontal plane and that the carriage bridges are mounted in bearings on said upper surface (5) of the stand for a rotational motion independent of the rotation of the stand and that the carriage bridges are connected to a motor (17) which moves the moving parts of the carriage bridges inward and outward by means of guide elements (18,19,20,21,27).

2. Display stand according to claim 1 **characterized** in that the rotational motion of the stand (5 and 9) and the rotational motion of the carriage bridges (7 and 8) have the same directions or different directions.

3. Display stand according to claim 1 or 2 **characterized** in that the rotational motions of the stand (5 and 9) and the carriage bridges (7 and 8) have the same speed.

4. Display stand according to any of the above claims **characterized** in that the angle between the inclined upper plane (5) of the stand and the horizontal plane is about 10-30°, advantageously about 20°.

5. Display stand according to any of the above claims **characterized** in that, two worm shafts (20) function as guide elements of the moving parts (7 and 8) of the carriage bridge, being connected (19) to each other at their ends by means of the motor driven driving shaft (18) and having a left-hand threading on one half and a right-hand threading on the other half.

6. Display stand according to any of the above claims **characterized** in that the ends of the moving parts of the carriage bridges are provided with rolling stops (22) for the motorcar, which are guided to stop position and down to free position by means of the said guide elements.

7. Display stand according to claim 6 **characterized** in that the rolling stops consist of bell cranks (22), being roughly L-shaped and being mounted in bearings on the ends of the moving parts of the carriage bridges (8), which lean, in stop position, against the wheels of the motorcar and whose rotation axles (23) are connected each to its own guide (21) of the moving part of the carriage bridge.

8. Display stand according to claim 6 or 7 **characterized** in that the rotation axle (23) of each bell crank (22) is connected by means of a chain or the like to the guide (21) on the worm shaft (20) functioning as the guide element.

9. Display stand according to claim 8 **characterized** in that the rotation axle (23) of the bell crank (22) cooperates with a latch device (26) being connected to a turning wheel detecting plate (25).

10. Display stand according to any of the above claims **characterized** in that the motor (17) effecting the motion of the moving parts (8) of the carriage bridge is prevented from operating simultaneously with any of the motors (4,6) effecting rotational motion.

11. Display stand according to any of the above claims **characterized** in that the ends of the moving parts (8) of the carriage bridges are sloped upwards and that a separate triangular ramp can be fitted on the floor surface to provide extensions of the carriage bridges.

12. Display stand according to any of the above claims **characterized** in that the rotating middle part (5 and 9) of the stand has a diameter of approximately equal size as or a little shorter size than the body parts of the carriage bridges and that the rotating middle part is surrounded by a horizontal flange (10) having wheels (12) in floor contact on its outer periphery the diameter of said flange being approximately of equal size as or a little shorter size than the maximum length of the carriage bridges (7 and 8).

13. Display stand according to claim 12 **characterized** in that the horizontal cross section of the rotating middle part (5 and 9) of the stand has a hexagonal form and that the outer periphery of the horizontal flange (10), surrounding it, and the middle part are congruent.

14. Display stand according to any of the above claims **characterized** in that the outer surfaces (9,10) of the stand parts are coated with mirror glass.

## Patentansprüche

1. Drehbarer Vorführungsstand für Personenkraftwagen, der um eine vertikale Achse rotiert und zwei verlängerbare und wiedereinfahrbare Tragbrücken (7, 8) aufweist, und zwar eine für die linksseitigen Räder und eine für die rechtsseitigen Räder, dadurch gekennzeichnet, daß der Vorführungsstand eine Oberseite (5) aufweist, die im Winkel zur Horizontalebene geneigt ist, daß die Tragbrücken in Lagern auf dieser Oberseite (5) des Vorführungsstandes für eine Drehbewegung unabhängig von der Drehung des Vorführungsstandes gehaltert sind, und daß die Tragbrücken an einen Motor (17) angeschlossen sind, der die beweglichen Teile der Tragbrücken mit Hilfe von Führungselementen (18, 19, 20, 21, 27) einfährt und ausfährt.

2. Vorführungsstand nach Anspruch 1 oder 2, dadurch gekennzeichnet, daß die Drehbewegung des Vorführungsstandes (5; 9) und die Drehbewegung der Tragbrücken (7, 8) die gleiche oder entgegengesetzte Richtungen aufweisen.

3. Vorführungsstand nach Anspruch 1 oder 2, dadurch gekennzeichnet, daß die Drehbewegungen des Vorführungsstandes (5, 9) und der Tragbrücken (7, 8) die gleiche Geschwindigkeit aufweisen.

4. Vorführungsstand nach den vorhergehenden Ansprüchen, dadurch gekennzeichnet, daß die Winkel zwischen der geneigten Oberseite (5) des Vorführungsstandes und der Horizontalebene etwa 10-30°, vorzugsweise etwa 20°, beträgt.

5. Vorführungsstand nach den vorhergehenden Ansprüchen, dadurch gekennzeichnet, daß zwei Schneckenwellen (20) als Führungselemente für die beweglichen Teile (7, 8) der Tragbrücken dienen, die an ihren Enden durch die vom Motor angetriebene Antriebswelle (18) miteinander verbunden (19) sind, und daß die Schneckenwellen auf der einen Hälfte ein Linksgewinde und auf der anderen Hälfte ein Rechtsgewinde aufweisen.

6. Vorführungsstand nach den vorhergehenden Ansprüchen, dadurch gekennzeichnet, daß in den Enden der beweglichen Teile der Tragbrücken Anschläge (22) gegen ein Abrollen der Personenkraftwagen vorgesehen sind, die in eine Halteposition und in eine Freigabeposition durch besagte Führungselemente überführbar sind.

7. Vorführungsstand nach Anspruch 6, dadurch gekennzeichnet, daß die Abroll-Anschläge aus angenähert L-förmigen Winkelhebeln (22) bestehen, die in Lagern in den Enden der beweglichen Teile der Tragbrücken (8) gehalten sind, die in Halteposition an den Rädern des Kraftfahrzeuges anliegen, und deren Schwenkachsen (23) jede an eine eigene Führung (21) der beweglichen Teilen der Tragbrücke angeschlossen sind.

8. Vorführungsstand nach Anspruch 6 oder 7, dadurch gekennzeichnet, daß die Schwenkachse (23) jedes Winkelhebels (22) über eine Kette oder ähnlichem mit der Führung (21) auf der Schneckenwelle (20) verbunden ist, die als Führungselement dient.

9. Vorführungsstand nach Anspruch 8, dadurch gekennzeichnet, daß die Schwenkachse (23) der Winkelhebel (22) in Wirkverbindung mit einem Hebel (26) steht, der mit einer Platte (25) zur Erkennung eines Drehens der Räder verbunden ist.

10. Vorführungsstand nach den vorhergehenden Ansprüchen, dadurch gekennzeichnet, daß der Antriebsmotor (17) für die beweglichen Teile (8) der Tragbrücke an einem gleichzeitigen Laufen mit den Motoren (4, 6) für die Drehbewegung gehindert ist.

11. Vorführungsstand nach den vorhergehenden Ansprüchen, dadurch gekennzeichnet, daß die Enden der beweglichen Teile (8) der Tragbrücken aufwärts geneigt sind und daß eine gesonderte, dreieckige Rampe auf der Bodenoberfläche montiert werden kann, um Verlängerungen für die Tragbrücken zu schaffen.

12. Vorführungsstand nach den vorhergehenden Ansprüchen, dadurch gekennzeichnet, daß das sich drehende Mittelteil (5, 9) des Vorführungsstandes einen Durchmesser aufweist, der ungefähr gleich groß oder geringfügig kleiner ist als der der Hauptteile der Tragbrücken, und daß das sich drehende Mittelteil von einem horizontalen, vorstehenden Rand (10) umgeben ist, der mit Rädern (12) mit Bodenkontakt am äußeren Umfang versehen ist, wobei der Durchmesser dieses Randes angenähert gleich oder geringfügig kleiner als die maximale Länge der Tragbrücken (7, 8) ist.

13. Vorführungsstand nach Anspruch 1 oder 2, dadurch gekennzeichnet, daß der Horizontalschnitt des sich drehenden Mittelteils (5, 9) des Vorführungsstandes eine sechseckige Form hat und daß der äußere Umfang des horizontalen Randes (10) und der Mittelteil kongruent sind.

14. Vorführungsstand nach den vorhergehenden Ansprüchen, dadurch gekennzeichnet, daß die außenliegenden Oberflächen (9, 10) der Standteile mit Spiegelglas verkleidet sind.

## Revendications

1. Présentoir rotatif pour voitures pouvant tourner sur un axe vertical et comportant deux ponts de support extensibles et rétractables (7,8), un pour les roues gauches, l'autre pour les roues droites, caractérisé en ce que le présentoir comporte une surface supérieure (5) formant un angle avec le plan horizontal et en ce que les ponts de support sont montés dans des paliers sur ladite surface supérieure (5) du présentoir pour un mouvement de rotation indépendant de la rotation du présentoir et en ce que les ponts de support sont reliés à un moteur (17) qui déplace les parties mobiles des ponts de support vers l'intérieur et vers l'extérieur au moyen d'éléments de guidage (18,19,20,21,27).

2. Présentoir selon la revendication 1, caractérisé en ce que le mouvement de rotation du présentoir (5 et 9) et le mouvement de rotation des ponts de support (7 et 8) se font dans des directions identiques ou différentes.

3. Présentoir selon la revendication 1 ou 2, caractérisé en ce que le mouvement de rotation du présentoir (5 et 9) et le mouvement de rotation des ponts de support (7 et 8) ont la même vitesse.

4. Présentoir selon l'une quelconque des revendications précédentes, caractérisé en ce que l'angle entre le plan supérieur incliné (5) du présentoir et le plan horizontal est d'environ 10 à 30°, avantageusement d'environ 20°.

5. Présentoir selon l'une quelconque des revendications précédentes, caractérisé en ce que deux arbres à vis sans fin (20) servent d'éléments de guidage pour les parties mobiles (7 et 8) du pont de support, étant reliés (en 19) l'un à l'autre à leurs extrémités au moyen de l'arbre de commande (18) actionné par moteur et comportant un pas de vis à gauche sur une moitié et un pas de vis à droite sur l'autre moitié.

6. Présentoir selon l'une quelconque des revendications précédentes, caractérisé en ce que les extrémités des parties mobiles des ponts de support sont dotées de butées de roulement (22) pour la voiture, qui sont guidées jusqu'à une position d'arrêt et descendues jusqu'à une position libre au moyen desdits éléments de guidage.

7. Présentoir selon la revendication 6, caractérisé en ce que les butées de roulement consistent en arbres coudés (22), étant sensiblement en forme de L et étant montés dans des paliers sur les extrémités des parties mobiles des ponts de support (8), qui s'appuient, dans la position d'arrêt, contre les roues de la voiture et dont les axes de rotation (23) sont chacun reliés à un guide propre (21) de la partie mobile du pont de support.

8. Présentoir selon la revendication 6 ou 7, caractérisé en ce que l'axe de rotation (23) de chaque arbre coudé (22) est relié au moyen d'une chaîne ou analogue au guide (21) sur l'arbre à vis sans fin (20) servant d'élément de guidage.

9. Présentoir selon la revendication 8, caractérisé en ce que l'axe de rotation (23) de l'arbre coudé (22) coopère avec un dispositif de verrouillage (26) étant relié à une plaque (25) de détection de rotation de roue.

10. Présentoir selon l'une quelconque des revendications précédentes, caractérisé en ce que le moteur (17) déplaçant les parties mobiles (8) du pont de support ne peut opérer simultanément à un des moteurs (4,6) permettant un mouvement de rotation.

11. Présentoir selon l'une quelconque des revendications précédentes, caractérisé en ce que les extrémités des parties mobiles (8) des ponts de support sont inclinées vers le haut et en ce qu'une rampe triangulaire distincte peut être fixée sur la surface du sol pour former des extensions des ponts de support.

12. Présentoir selon l'une quelconque des revendications précédentes, caractérisé en ce que la partie centrale rotative (5 et 9) du présentoir a un diamètre légèrement inférieur ou égal aux portions de corps des ponts de support et en ce que la partie centrale rotative est entourée d'un rebord horizontal (10) comportant des roues (12) en contact avec le sol sur sa périphérie externe, le diamètre dudit rebord étant légèrement inférieur ou égal à la longueur maximale des ponts de support (7 et 8).

13. Présentoir selon la revendication 12, caractérisé en ce que la section transversale horizontale de la partie centrale rotative (5 et 9) du présentoir a une forme hexagonale et en ce que la périphérie externe du rebord horizontal (10), entourant la partie centrale rotative, et la partie centrale sont congruentes.

14. Présentoir selon l'une quelconque des revendications précédentes, caractérisé en ce que les surfaces externes (9,10) des parties du présentoir sont revêtues de verre à glace.
